(19) Europäisches Patentamt
European Patent Office
Office européen des brevets

(11) Publication number: **0 348 050 A1**

(12) # EUROPEAN PATENT APPLICATION

(21) Application number: 89305471.8

(51) Int. Cl.[4]: C09B 69/10 , C09D 11/02

(22) Date of filing: 31.05.89

(30) Priority: 20.06.88 GB 8814637

(43) Date of publication of application: 27.12.89 Bulletin 89/52

(84) Designated Contracting States: AT BE CH DE ES FR GB GR IT LI NL SE

(71) Applicant: IMPERIAL CHEMICAL INDUSTRIES PLC
Imperial Chemical House Millbank
London SW1P 3JF(GB)

(72) Inventor: Greenwood, David
66 Sherwood Way Shaw
Oldham Lancashire(GB)
Inventor: Hughes, Nigel
7 Leonardin Close Shaw
Lancashire(GB)
Inventor: Hindagolla, Suraj Lakshman
591 South East Hathaway Place
Corvallis Oregon 97333(US)

(74) Representative: Pugsley, Roger Graham et al
IMPERIAL CHEMICAL INDUSTRIES PLC Legal Department: Patents PO Box 6 Bessemer Road
Welwyn Garden City Herts, AL7 1HD(GB)

(54) **Colorant for printing.**

(57) A colorant free from cellulose reactive groups comprising an anionic dye carrying from 1 to 10 acidic groups and at least one poly($C_{2-4}$-alkyleneimine) group containing from 2 to 10 $C_{2-4}$-alkyleneimine units-. The colorant is adapted for the preparation of aqueous inks for use in the printing of paper to give prints having enhanced water-fastness. The black colorants of this class are especially suitable for use in ink-jet printing inks for the printing of alphanumerics and related symbols from computer output.

EP 0 348 050 A1

## Colorant for Printing

This specification describes an invention relating to a novel colorant and particularly to a colorant which is adapted for the production of a water-resistant image on paper. The image may be formed by dissolving the colorant in an aqueous solvent to form an ink and applying the ink to paper, preferably by means of an ink-jet printing process.

The present invention provides a colorant free from cellulose reactive groups comprising an anionic dye carrying a total of from 1 to 10 acidic groups and at least one poly($C_{2-4}$-alkylene-imine) ("PAI") group containing from 2 to 10 $C_{2-4}$-alkyleneimine ("AI") units.

The PAI groups may be attached directly to the anionic dye but are preferably linked to the anionic dye through polyvalent, preferably di- or tri-valent, linking groups.

The anionic dye preferably comprises 1 or 2 chromophoric groups and from 1 to 3 polyvalent linking groups through which each chromophoric group is linked to another chromophoric group or to a poly($C_{2-4}$-alkyleneimine) ("PAI") group. The acidic groups may be carried by the chromophoric and/or the linking groups.

The colorant may be derived from known anionic dyes which may already carry suitable polyvalent linking groups and the required number of acidic groups although if there are none or insufficient linking groups and/or acidic groups already present, more of each may be added by methods familiar to the skilled man.

The acidic groups are preferably selected from carboxylate, $-COO^-$ phosphonate, $-PO_3^-$, and, more preferably, sulphonate, $SO_3^-$. Where the colorant contains more than one acidic group these may be the same or different. There should preferably be sufficient acidic groups to render the colorant water-soluble to the extent of 5% at pH 8 or above and it is preferred that there are from 2-6, and especially, 3-5 such groups. It is preferred that most, and more especially all, of the acidic group are sulphonic acid groups.

Each chromophoric group is preferably the residue of an azo, anthraquinone, phthalocyanine or triphendioxazine dye and preferably carries from 1 to 4 acidic groups.

The azo dye is preferably a mono- or bis-azo dye derived from benzene or naphthalene diazo components and benzene, naphthalene or monocyclic heteroaromatic couplers, preferred monocyclic heteroaromatic couplers being pyridones and pyrazolones. Preferred diazo components and couplers are those typically used in the preparation of water-soluble dyes, especially direct, acid and cellulose reactive dyes, generally carrying substituents selected from hydroxy, amino, $C_{1-4}$-alkylamino, di-($C_{1-4}$-alkyl)amino, phenylamino, naphthylamino, acetylamino, nitro, cyano, $C_{1-4}$-alkyl, $C_{1-4}$-alkoxy, trifluoromethyl, halogen, especially chlorine and bromine, and especially acidic groups which promote water-solubility such as carboxylate ($-COO^-$), phosphonate ($PO_3^-$), and sulphonate ($-SO_3^-$).

The anthraquinone dye preferably carries up to 5, and more especially up to 4, substituents selected from hydroxy, $C_{1-4}$-alkoxy, phenoxy, amino, mono- or di-$C_{1-4}$-alkylamino, phenylamino (especially tolylamino or acetylaminophenylamino), nitro and sulphonate. The sulphonate groups may present on the anthraquinone nucleus or on the previosly mentioned substituents.

The phthalocyanine is preferably a copper phthalocyanine carrying up to 10 peripheral substituents selected from halogen, especially chlorine and bromine, $C_{1-4}$-alkyl- or phenyl-sulphonamido, and especially from 1 to 4 sulphonate groups

The triphendioxazine dye is preferably a 9,10-dihalo-1,5-disulphotriphendiaxazine, preferably having amino or hydroxy groups in the 2,6- and/or 3,7 positions for attaching PAI groups, preferably through linking groups, in order to prepare symmetrical colorants of Formula III, below.

Preferred linking groups are derived from compounds containing active hydrogen or halogen atoms which react with amino or hydroxy groups. Thus, a chromophoric group is preferably derived from a dye carrying a hydroxy, or more preferably an amino, group by removal of a hydrogen atom therefrom or by removal of the complete hydroxy or amino group. It follows that the dye from which any chromphoric group is derived preferably carries sufficient amino and/or hydroxy groups, especially amino groups, through which it may be attached to the appropriate number of linking groups and thereby linked to other chromophoric groups and/or PAI groups.

Examples of preferred chromophoric groups are: 1-hydroxy-2-(1-[4-sulphophenylazo]-6-sulphonaphth-4-ylazo)-3-sulphonaphth-7-ylamino

1-hydroxy-2-(1-[4-sulphophenylazo]-6-sulphonaphth-4-ylazo)3, 6-disulphonaphth-7-ylamino

1-hydroxy-2-(1-[4-sulphophenylazo]-naphth-4-ylazo)-3-sulphonaphth-7-ylamino

3- (4-[1-hydroxy-3-sulpho-7-aminonaphth-2-ylazo]-6-sulphonaphth-1-ylazo)-4-sulphophenylamino

1-hydroxy-2-(2-sulphopenylazo)-3,6-disulphonaphth-8-ylamino

3-[1-amino-2-(4-nitrophenylazo)-3,6-disulpho-8-hydroxynaphth-7-yl-azo]-4-sulphophenylamino
1-hydroxy-2-(1-[4-carboxyphenylazo]-6-sulpho-naphth-4-ylazo)-3-sulphonaphth-7-ylamino
1-hydroxy-2-(1-[2-sulpho-5-aminophenylazo]-6-sulphonaphth-4-ylazo)-3-sulphonaphth-7-ylamino
1-hydroxy-2-(4-[2,5-disulphophenylazo]-2-methoxy-5-methylphenylazo)-3,6-disulphonaphth-8-ylamino
1-hydroxy-2-(2-sulphophenylazo)-3-sulphonaphth-6-ylamino
1-hydroxy-2-(1,5-disulphonaphth-2-ylazo)-3,6-disulphonaphth-8-yl-amino
3-[1-amino-2-(4-[4-(4-amino-2-hydroxyphenylazo)phenylamino]-3-sulphophenylazo)-3,6-disulpho-8-hydroxynaphth-7-ylazo]-4-sulphophenylamino
3-[1-amino-2-(4-[4-(2-amino-4-hydroxyphenylazo)phenylamino]-3-sulphophenylazo)-3,6-disulpho-8-hydroxynaphth-7-ylazo]-4-sulphophenylamino
9,10-dichloro-1,5-disulphotriphendioxazin-2,6-yl-bis(aminoethyl)-amino
Copper aminoethylaminosulphonylphthalocyanine trisulphonic acid
Copper aminosulphonylphthalocyanine disulphonic acid
5-(1-amino-2-sulphoanthraquinon-4-ylamino)-2-sulphophenylamino

Each PAI group, which may be attached directly to a chromophoric group but is preferably attached through a linking group, preferably conforms to the formula:

$- NH - (C_mH_{2m}NH)_p - W$ I

wherein m is from 2 to 4, preferably 2 or 3;
p is from 2 to 10, preferably 2 to 6; and W is H or $C_{1-4}$-alkyl.

Where the colorant contains more than one PAI group, these may be the same or different provided that at least one, and more preferably all, are as hereinbefore defined. It is preferred that the colorant carries not more than 5, and more especially, 1 or 2 PAI groups and that these conform to Formula I. It is further preferred that the total number of AI units, in all the PAI groups is from 3 to 12 and more preferably from 3 to 8. Preferred PAI groups include diethylenetriamino and more especially triethylenetetramino, tetraethylenepentamino and pentaethylenehexamino

The linking group or groups may be any convenient di-, tri-or tetra-valent group, depending on the number of chromophoric and/or PAI groups to be attached together, capable of linking one or more PAI group to one or more chromophoric groups and may be already present in the dye from which the chromophoric group is derived.

The linking groups may be simple linking groups, such as 2,4,6-triazin-1,3-ylene (divalent) and 2,4,6-triazin-1,3,5-ylene (trivalent)
derivable from cyanuric chloride or from a mono- or di-chlorotriazinyl group attached to dye from which the chromophoric group is derived;
1,6,- 3,6 or 5,6-dichloro-2,4-pyrimidinylene (divalent), 6-chloro-2,4-pyrimidin-1,3,5-ylene (trivalent) and 2,4-pyrimidin-1,3,5,6-ylene (tetravalent),
derivable from 1,3,5,6-tetrachloropyrimidine or from a tri-chloropyrimidinyl group attached to the dye from which the chromophoric group is derived;
6-carbonylquinoxalin-2,3,6-ylene (trivalent)
derivable from 2,3-dichloroquinoxaline carboxylic acid or a monoor from a di-chloroquinoxalin-6-ylcarbonyl group attached to the dye from which the chromophoric group is derived;
carbonyl (divalent)
derivable from phosgene or a -COCl groups attached to the dye from which the chromophoric group is derived;
sulphonyl (divalent)
derivable from chlorosulphonic acid or a $-SO_2Cl$ groups attached to the dye from which the chromophoric group is derived;
methylene (divalent)
derivable from formaldehyde or from a -CHO group attached to the dye from which the chromophoric group is derived;
or complex linking groups derived from one or more simple linking groups.

Complex linking groups may be formed where a simple linking group has more valencies than are required to link together the desired number of chromophoric and PAI groups. The simple linking group may be formed into a complex linking group,

(i) by the attachment of a monovalent blocking group to each free valency (i.e. one not required to link the desired number of chromophoric and PAI groups) on the linking group, or

(ii) by linking it to one or more other linking groups, but preferably only one, with a polyvalent, preferably a divalent, bridging group.

The blocking or bridging groups may also carry acidic groups which form part of the total of 1 to 10

acidic groups present in the colorant. Preferred blocking groups are selected from hydroxy, alkoxy and alkylthio, especially $C_{1-4}$-alkoxy and alkylthio, alkenoxy, especially $C_{3-4}$-alkenoxy, cycloalkoxy, especially cyclohexoxy, aryloxy and thio analogues thereof, especially phenoxy and phenylthio and amino. Preferred bridging groups are diamino groups, such as diaminophenylene, diamino- naphthylene, diaminodiphenylene, diaminodiphenylamine, diamino- stilbenylene and diamino-$C_{1-4}$-alkylene.

Where the blocking or bridging group is an amino or a diamino group this is preferably of the formula, $-NT^1T^2$ or $-NT^1-X-NT^2-$in which X is arylene or alkylene, $T^1$ and $T^2$ are each independently H, alkyl, alkenyl, cycloalkyl or aryl, or $T^1$ and $T^2$, or $T^1$, $T^2$ and X, together with the nitrogen atom(s) to which they are attached, form a heteroalicyclic group, such as piperidino, morpholino, piperazino.

Where the blocking or bridging group is or contains alkyl, alkylene, alkenyl or cycloalkyl these are preferably optionally substituted $C_{1-4}$-alkyl, $C_{2-6}$-alkylene, $C_{2-4}$-alkenyl or $C_{4-8}$-cycloalkyl, respectively, and especially methyl, ethyl, n-propyl, allyl and cyclohexyl, in which preferred optional substituents are halogen, $C_{1-4}$-alkoxy and $C_{1-4}$-alkyl and phenyl. Where the blocking or bridging group is or contains aryl, this is preferably optionally substituted phenyl (e.g phenyl and phen-1,4-ylene) or naphthyl, (e.g. naphth-1-yl, naphth-2-yl, naphth-1,4-ylene and naphth-1,5-ylene) in which preferred optional substituents are $-SO_3H$, -COOH, $-PO_3H$, OH, $C_{1-4}$-alkyl, $C_{1-4}$-alkoxy, nitro, or a PAI group. Examples of suitable blocking and bridging groups are hydroxy, methoxy, phenoxy, methylamino, benzylamino, N,N-dimethylamino, phenylamino, N-methylN-phenylamino, 2-, 3- or 4-sulphophenylamino, 2,4- or 2,5-disulphophenylamino, phen-1,2-ylene, 3- or 4-sulphophen-1,2-ylene, phen-1,3-ylene, 4- or 5-sulphophen-1,3-ylene, phen-1,4-ylene and 2-sulphophen-1,4-ylene.

A preferred colorant may be conveniently represented by one of the following formulae:

```
D - J - R      (II)          R - J - D - J - R      (III)

       R                            R
      /                            /
D - L          (IV)         D - L               (V)
      \                            \
       R                            D

                 D     D
                  \   /
                    M          (VI)
                  /   \
                 R     R
```

wherein

each D independently is a chromophore

each J independently is a divalent linking groups

each L independently is a trivalent linking group

M is a tetravalent linking group; and

each R independently is a PAI group containing from 2 to 10 AI units;

in which the total number of acidic groups in each compound, carried by D, J, L & M, is from 1 to 10.

It is especially preferred that the colorant is black by virtue of the incorporation of a black chromophoric group or groups or of two or more chromophoric groups which in combination give rise to a black colorant.

The linking groups represented by J, L and M may be simple linking groups or complex linking groups formed by combination of linking groups with blocking and/or bridging groups as hereinbefore described. Examples of such complex linking groups are:

5-(3-sulphophenylamino)-2,4,6-triazin-1,3-ylene in which 2,4,6-triazin-1,3,5-ylene is a trivalent linking group and 3-sulphophenylamino is a monovalent blocking group;

5-(2-hydroxyethylamino)-2,4,6-triazin-1,3-ylene in which 2,4,6-triazin-1,3,5-ylene is a trivalent linking group and 2-hydroxyethylamino is a monovalent blocking group;

1,4-di(2,4,6-triazin-1,3-ylene-5-ylamino)benzene in which each 2,4,6-triazin-1,3,5-ylene is a trivalent linking group and 1,4-diaminophen-1,4-ylene is a divalent bridging group.

Examples of suitable colorants of Formula I are:

1-hydroxy-2-(1-[4-sulphophenylazo]-6-sulphonaphth-4-ylazo)-3-sulpho 7-(3,5-di-[triethylenetetramin-1-yl]-2,4,6-triazin-1-yl-amino)-naphthalene

2-(-4-[4-sulphophenylazo]-naphth-1-ylazo)-1-hydroxy-3-sulpho-7-(3,5-di-[triethylenetetramin-1-yl]-2,4,6-triazin-1-yl-amino)-naphthalene

1-(1-hydroxy-3-sulpho-7-aminonaphth-2-ylazo)-4-(2-sulpho-5-[3-(sulphophenylamino)-5-(triethylenetetramin-1-yl)-2,4,6-triazin-1-ylamino]-2-sulphophenylazo)-7-sulphonaphthalene

2-(-4-[2,5-disulphophenylazo]-2-methoxy-5-methylphenylazo)-1-hydroxy-3,6-disulpho-8-(3-[pentaethylenehexamin-1-yl]-5-[5-hydroxy-6-(2-sulphophenylazo)-7-sulpho-naphth-2-ylamino]-2,4,6-triazin-1-yl-amino)-naphthalene

bis-1,3-(3-[3,6-disulpho-8-hydroxy-7-(1,5-disulphonaphth-2-ylazo)-naphth-1-ylamino]-5-[triethylenetetramin-1-yl]-2,4,6-triazin-1-yl amino)-benzene

1-amino-2-(4-[4-(4-amino-2-hydroxyphenylazo) phenylamino]-3-sulphophenylazo)-3,6-disulpho-8-hydroxy-7-(2-sulpho-5-[3-(3-sulphophenylamino)-5-(pentaethylenehexamin-1-yl)-2,4,6-triazin-1-yl-amino]-phenylazo)-naphthalene

9,10-dichloro-1,5-disulpho-2,6-di-(3-[3-sulphophenylamino-5-[triethylenetetramin-1-yl]-2,4,6-triazin-1-ylaminoethylamino)-triphendioxazine

Copper 3,5-di-(triethylenetetramin-1-yl)-2,4,6-triazin-1-ylaminoethylaminosulphonyl-phthalocyanine trisulphonic acid

Copper triethylenetetramin-1-yl)sulphonylphthalocyanine trisulphonic acid

1-amino-2-sulpho-4-(4-sulpho-3-[3-(tetraethylenepentamin-1-yl)-5-(3-sulphophenylamino)-2,4,6-triazin-1-ylamino]phenylamino)-anthraquinone

1-hydroxy-2-(2-sulphopenylazo)-3,6-disulpho-8-(di-[3,5-triethylenetetramin-1-yl-6-chloro-2,4-pyrimidin-1-ylamino)-naphthalene·

1-hydroxy-2-(2-sulphopenylazo)-3,6-disulpho-8-(5-[4-sulphophenylamino]-3-pentaethylenehexamin-1-yl-6-chloro-2,4-pyrimidin-1-yl-amino)-naphthalene

1-hydroxy-2-(2-sulphopenylazo)-3,6-disulpho-8-(2-[3-sulphophenylamino]-3-tetraethylenepentamin-1-ylquinoxaline-6-ylcarbonylamino)-naphthalene

1-hydroxy-2-(4-[4-sulphophenylazo]-7-sulpho-naphthylazo)-3-sulpho-7-(pentaethylenehexamin-1-ylcarbonylamino)naphthalene

1-hydroxy-2-(4-[4-sulphophenylazo]-7-sulpho-naphthylazo)-3-sulpho-7-(triethylenetetramin-1-ylmethylamino)-naphthalene

The present colorants may conveniently be prepared from a dye carrying one or more groups containing one or more active halogen atoms by reaction with a polyalkyleneimine. Examples of groups containing active halogen or hydrogen atoms are, chlorotriazinyl, dichlorotriazinyl, dichloropyrimidinyl, trichoropyrimidinyl, chloroquinoxalinyl and dichloroquinoxalinyl. Such a dye may be prepared by reaction of a dye having one or more amino or hydroxy groups with a compound having active chlorine atoms, such as cyanuric chloride or a polychloro- pyrimidine or quinoxaline. Colorants having a carbonyl, sulphonyl or methylene linking group may be prepared by reacting an appropriate dye with phosgene, formaldehyde or chlorosulphonic acid and subsequently with a polyalkyleneimine.

It is preferred that the ratio of the number of acid groups in the colorant to the number of basic nitrogen atoms in the PAI groups of Formula I is such that the colorant has an isoelectric point in the range pH 4 to pH 12 and more preferably in the range 5 to 7.

Because the colorant contains both acidic and basic nitrogen atoms in the PAI groups, preferably substantially in balance, it will form Zwitter-ions or inner-salts at or close to the isoelectric point at which point the colorant should have a minimum solubility in water. Thus the water-solubility of the colorant should increase as the pH of the environment in which it is located moves away from the isoelectric point.

It has been found that the present colorant can be dissolved in an aqueous medium at a pH significantly above the isoelectric point, preferably from pH 7.5 to pH 9, at normal concentrations (which, depending on its inherent solubility, can be up to 20% by weight) so that it can be formulated as a stable ink for application by any suitable technique, especially ink-jet printing, to a paper substrate. After application of the ink to the substrate and evaporation of the solvent, the colorant is at a pH determined by the surface of the paper substrate. The natural pH of many paper substrates (pH 5-7) is such that the colorant will be closer to the isoelectric point than it was in the solution and therefore less soluble. This means that the colorant will be more resistant to removal from the substrate by washing, i.e. it will have a higher water-fastness than in non-zwitterionic form in which it exists in the aqueous medium.

If the isoelectric point of the colorant is significantly different from the natural pH value of the paper surface, the pH of the paper surface can be adjusted downwards, by the addition to the ink of a salt of an acid with a volatile base, such as ammonia. When the ink dries the base evaporates to leave the free acid which will lower the pH of the paper surface in the region of the colorant. To minimise damage to the paper

it is preferred to use a weak acid, such as acetic acid.

To avoid possible harmful effects to standard printing equipment it is preferred that the colorant has an isoelectric point in the region of the natural pH of the paper, i.e. pH 5-7, and to dissolve the colorant in an aqueous ink medium at pH 7.5-9. On application of the ink to paper and evaporation of the solvent, the colorant will exist in an environment with a natural pH of 5-7, i.e. closer to the isoelectric point than it was in solution and thus the water-fastness of the colorant is increased. If desired, the pH of the paper surface can be reduced by the addition to the ink of a salt of a weak acid with a volatile base.

A suitable ink comprises a solution of a colorant according to Formula I in an aqueous medium.

The ink preferably contains from 0.5% to 20%, more preferably from 0.5% to 15%, and especially from 1% to 10%, by weight of the colorant based on the total weight of the ink.

Liquid media used for preparing the present ink include water and mixtures of water with various water-soluble organic solvents. The water-soluble organic solvents include $C_1$-$C_4$ alkanols such as methanol, ethanol, n-propanol, isopropanol, n-butanol, sec-butanol, tert-butanol, isobutanol; amides such as dimethylformamide and dimethylacetamide; ketones or ketone alcohols such as acetone and diacetone alcohol; ethers such as tetrahydrofuran and dioxane; nitrogen-containing heterocyclic ketones such as N-methyl-2-pyrrolidone and 1,3-dimethyl-2-imidazole-idinone; polyalkylene glycols such as polyethylene glycol and polypropylene glycol; alkylene glycols and thioglycols containing $C_2$-$C_6$ alkylene groups such as ethylene glycol, propylene glycol, butylene glycol, triethylene glycol; thiodiglycol, hexylene glycol, and diethylene glycol; other polyols such as glycerol, 1,2,6-hexanetriol; and lower alkyl ethers of polyhydric alcohols such as 2-methoxyethanol, 2-(2-methoxyethoxy)ethanol, 2-(2-ethoxyethoxy)ethanol and 2-[2-(2-methoxyethoxy)ethoxy]ethanol, 2-[2-(2-ethoxyethoxy)ethoxy]-ethanol.

Preferred water-soluble organic solvents among these are glycols and glycol ethers, such as ethylene glycol, diethylene glycol, triethylene glycol and 2-methoxy-2-ethoxy-2-ethoxyethanol; polyethylene glycols with molecular weights up to 500; and heterocyclic ketones such as N-methylpyrrolidone and 1,3-dimethyl-2-imidazolidione. Preferred specific solvent mixtures are a binary mixture of water and diethylene glycol and a tertiary mixture of water, diethylene glycol and N-methyl-pyrrolidone.

The ink may be applied to the substrate by any convenient printing technique but the present dye and ink is particularly suitable for use in ink jet printing. An especially suitable process for the application of an ink as hereinbefore defined to a paper substrate comprises forming the ink into small droplets by ejection from a reservoir through a small orifice by the application of heat so that the droplets of ink are directed at the paper substrate.

This printing process is conventionally referred to as thermal ink jet printing and is used to form a record on the paper substrate by the programmed application of pulses of heat to the ink adjacent to the orifice during relative movement between the paper substrate and the reservoir.

The invention is further illustrated by the following Examples in which all parts and percentages are by weight unless otherwise indicated.

Example 1

Stage 1

A solution was prepared by mixing 25.3g aniline-2,5-disulphonic acid (0.1M) with 125g water and sufficient of a 32% aqueous solution of sodium hydroxide to give a neutral solution. The mixture was then stirred with 7.25g sodium nitrite and the resultant solution added to 20g 36% hydrochloric acid and 50g ice over 10 minutes with suitable agitation. The resultant suspension was held at 15-20° C for 15 minutes after which 10% sulphamic acid solution was added to remove excess nitrous acid and 20% sodium carbonate solution to raise the pH to 4.0-4.5.

A solution of 13.7g cresidine (0.1M) in 50g water and 8.7g 36% hydrochloric acid (8.7 parts) was prepared at 60° C. The solution was added slowly to a mixture of 125g water, 20g sodium acetate and 40g ice at <10° C.

The diazo compound prepared above was added to the suspension of cresidine over 15 minutes at <10° C. The suspension was stirred 18 hours and the product collected by filtration, washed with saturated sodium chloride solution and dried at 40° C to give 85g (0.092 moles, yield 92.15%) of the amino-azo dye 2-methoxy-4-(2,5-disulphophenylazo)-5-methylaniline.

Stage 2

A solution of 92.3g of the amino-azo dye from Stage 1 (0.1M) in 250g water at pH 7.5-8.0 was prepared and 52.5g 2N sodium nitrite solution (0.105M) was added. The resulting solution was added to 50g 36% hydrochloric acid and 250g ice over 15 minutes at 0-5 °C and the mixture stirred for 15 minutes after which excess nitrous acid was removed by the addition of 10% sulphamic acid solution.

The solution of the diazotised amino-azo dye was then added, at <10 °C, over 20 minutes to a solution of 36.1g acetyl-H-acid (0.11M) in 300g water. At the same time 170g of 8% sodium hydroxide solution was added dropwise to the reaction to maintain the pH value at 7.5-8.5. The coupling mixture was stirred 1 hour at 0-5 °C after which 310g salt was added, followed by 36% hydrochloric acid to maintain a pH of 2.0 and to precipitate the product. The disazo dye was collected by filtration, washed with a 25% sodium chloride solution and dried. The dry product was added to 1000g 8% sodium hydroxide solution and the mixture heated to 70-80 °C for 6 hours. The solution was cooled to 40 °C, 36% hydrochloric acid added to a pH value of 7.0 followed by 250g salt (25% w/v) to precipitate the dye. This was collected by filtration and washed with 25% sodium chloride solution. The 381g filter paste contained 62.5g (0.089 moles), yield = 76.5%) of the disazo-amino dye 1-amino-3,6-disulpho-7-[2-methoxy-4-(2,5-disulphophenylazo)-5-methylphenyl-azo]-8-hydroxy-naphthalene.

Stage 3

To a solution of 49.85g of the disazo dye from Stage 2 (0.01M) in 100g water at 0-2 °C was added evenly a solution of 3.7g cyanuric chloride in 30g acetone with rapid agitation. The pH was maintained at 5-6 by the addition of 8% sodium hydroxide solution and the reaction was complete in 1 hour. The solution was screened and a neutral solution of 2.39g J-Acid (0.01M) in 100g water was added. This solution was warmed to 35 °C over 1 hour and this temperature maintained a further 1 hour. At the same time a pH value of 6.0-6.5 was maintained by the addition of 8% sodium hydroxide solution. The reaction was tested for completion by thin-layer chromatography.

To the solution was added 6g pentaethylenehexamine and this was then heated to 50-55 °C for 7 hours. The pH was adjusted to 5.0 with 5N HCl to precipitate the dye. The product was collected by filtration and washed with water (200g) to give 30.5g of a paste containing 9.13g (0.00715M) of the dye: (yield = 71.5%) 2-(4-[2,5-disulphophenylazo]-2-methoxy-5-methylphenylazo)-1-hydroxy-3,6-disulpho-8-(3-[pentaethylenehexamin-1-yl]-5-[5-hydroxy-7-sulpho-naphth-2-ylamino]-2,4,6-triazin-1-yl-amino)naphthalene, free acid.

Stage 4

A solution of 1.73g orthanilic acid (0.01M) in 100g water at pH 8.0 was prepared, using 8% sodium hydroxide solution. To this solution was added 5.25g of 2N sodium nitrite solution and the whole cooled to 0-5 °C. To this was then added 5g of 36% hydrochloric acid and excess nitrous acid maintained for 30 minutes at 0-5 °C. Excess nitrous acid was then removed by the addition of 10% sulphamic acid.

A portion of the dye produced in Stage 3 (42.7g, 0.01M) was added to 125g water and completely dissolved by adjusting the pH to 9.0 with 2N NaOH; added slowly with stirring. The diazotised orthanilic acid solution described above was added over 15 minutes at 0-5 °C and the pH maintained at 7.5-8.5 by the addition of 20g 8% sodium hydroxide solution. The solution was stirred to room temperature and the dye precipitated by the addition 2N HCl to pH 5.0. The dye was collected by filtration and washed with 200g water. The solid was redissolved in 200g distilled water and subjected to dialysis. The resulting solution, free from inorganic compounds, was evaporated to dryness at 50-60 °C in vacuum to yield 14.3g of a colorant according to the present invention:
2-(-4-[2,5-disulphophenylazo]-2-methoxy-5-methylphenylazo)-1-hydroxy-3,6-disulpho-8-(3-[pentaethylenehexamin-1-yl]-5-[5-hydroxy-6-(2-sulphophenylazo)-7-sulpho-naphth-2-ylamino]-2,4,6-triazin-1-yl-amino)-naphthalene, sodium salt, (yield: 90%).

Example 2

An ink was prepared by mixing together 3 parts of the product of Example 1 Stage 4, 10 parts of

diethylene glycol and 87 parts of water to give a solution at pH 8.0. The solution was filtered through a nylon cloth (pore size 0.45µm) and then degassed under vacuum. The solution was applied to plain paper, using a piezo or thermal ink-jet printing machine and the image obtained had a very high resistance to water. When the paper carrying the printed image was immersed in water or sprayed with a jet of water there was no detectable colour loss or deterioration of print quality.

Example 3

The procedure of Example 1 was repeated except that tetraethylene pentamine (5g) was substituted for the 6g of pentaethylene hexamine in Stage 3 to give the dye 2-(4-[2,5-disulphophenylazo]-2-methoxy-5-methylphenylazo)-1-hydroxy-3,6-disulpho-8-(3-[tetraethylenepentamin-1-yl]-5-[5-hydroxy-7-sulphonaphth-2-ylamino]-2,4,6-triazin-1-ylamino)naphthalene.

An ink was prepared as Example 2 using 3 parts of the colorant described in Example 3. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 4

Stage 1

A solution was prepared by mixing 17.4g sulphanilic acid (0.1M) with 200g water and sufficient of a 50% aqueous solution of sodium hydroxide to give a neutral solution. The mixture was then stirred with 7g sodium nitrite and the resultant solution added to 20g 36% hydrochloric acid and 50g ice over 10 minutes with suitable agitation. The resultant suspension was held at 5-10°C for 1 hour after which 10% sulphamic acid solution was added to remove excess nitrous acid.

A solution of 22.7g 1,7 Cleves acid (0.1M) was stirred in 100g water with sufficient of a 50% aqueous solution of sodium hydroxide to give a neutral solution. This suspension was then added to the diazo solution prepared above over 10 minutes at <10°C. The mixture was adjusted to pH 4.0 with sodium acetate. The suspension was stirred for 4 hours during which time the temperature was allowed to warm to room temperature and pH 4.0 maintained with sodium acetate. The product was collected by filtration, washed with water and dried at 60°C to give 40g (0.097 moles, yield 97.2%) of the amino-azo dye 4-(4-sulphophenylazo)-7-sulpho-1-naphthylamine.

Stage 2

A solution of 50g (0.1M) of the amino-azo dye from Stage 1 in 200ml water and 50ml 2N sodium hydroxide wash prepared and 9g sodium nitrite was added. The resulting solution was cooled to <10°C and added dropwise over 10 minutes to a solution of 50g 36% hydrochloric acid and 400g water. The temperature was allowed to rise to room temperature over 3 hours after which time 10% sulphamic acid solution was added to remove excess nitrous acid and then cooled to 5°C.

The diazo compound prepared above was added to a solution of 31.9g (0.1M) 2R acid in 500g water with 25g soda ash and sufficient of a 50% solution of sodium hydroxide to give a neutral solution. The suspension was cooled to 5-10°C and maintained at pH 8-9 by further additions of 2N sodium hydroxide. After 1 hour 25% sodium chloride (w/v) was added to precipitate the dye. This was collected by filtration and washed with 25% sodium chloride solution. It was then dried at 60°C to give 57g (0.077 moles, yield 77.34%) of the disazo-amino dye 2-amino-3,6-disulpho-7-[4-(4-sulphophenylazo)-7-sulpho-1-naphthylazo]-8-hydroxynaphthalene.

Stage 3

To a solution of 3.19g (0.01M) of the disazo dye from Stage 2 in 100g water at 5°C was added evenly a solution of 1.85g cyanuric chloride in 30g acetone with rapid agitation. The pH was maintained at 7.0 with

1N sodium hydroxide solution and the reaction mixture was allowed to warm to room temperature. The reaction was tested for completion by thin layer chromatography. After 3 hours, 5g of triethylene tetramine was added and the resultant mixture stirred overnight at room temperature. The pH was adjusted to 7.0 with concentrated HCl to precipitate the dye. The product was then collected by filtration, and washed with water. The solid was redissolved in 200g water at pH 8.0 with 1N sodium hydroxide solution and subjected to dialysis. The resulting solution free from inorganic compounds was evaporated to dryness at 60° C in vacuum to give 9.74g (0.0088 moles, 88.2% yield) of the dye 2-[4-(4-sulphophenylazo)-7-sulpho-1-naphthylazo]-1-hydroxy-3,6-disulpho-7-[3,5-di-(triethylenetetramin-1-yl)-2,4,6-triazin-1-ylamino]-naphthalene.

An ink was prepared as Example 2 using 3 parts of the colorant described in Example 4 Stage 3. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 5

The procedure of Example 4 was repeated except that 19.1g Gamma acid was substituted for the 31.9g of 2R acid in Stage 2 to produce the dye 2-[4-(4-sulphophenylazo)-7-sulpho-1-naphthylazo]-1-hydroxy-3-sulpho-7-[3,5-di(triethylenetetramin-1-yl)-2,4,6-triazin-1-ylamino]-naphthalene.

An ink was prepared as Example 2 using 3 parts of the colorant described in Example 5. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 6

Stages 1 & 2

The procedure for Example 5 Stages 1 and 2 was repeated.

Stage 3

To a solution of 65.7g (0.1M) of the disazo dye from Stage 2, in 1 litre water at 5° C and at pH 7.0 with 1N sodium hydroxide solution, was added evenly a solution of cyanuric chloride (18.5g) in 100ml acetone. The reaction was rapidly agitated at 5° C and the pH maintained at 7 with further additions of 1N sodium hydroxide solution. The reaction was tested for completion by thin layer chromatography. After 3 hours, 17.2g metanilic acid was added as a neutral solution in 100g water. Stirred overnight at 40° C and at pH 7.0. After 14 hours 10% w/v sodium chloride was added and the pH adjusted to 5.0 with glacial acetic acid to precipitate dye. This was collected by filtration and washed with 10% sodium chloride solution at pH 5.0 with acetic acid. It was then dried at 60° C to give 80.4g (0.085 moles, 85.4% yield) of the disazo dye 2-[4-(4-sulphophenylazo)-7-sulpho-1-naphthylazo]-1-hydroxy-3-sulpho-7-[3-chloro5-(3-sulphophenylamino)-2,4,6-triazin-1-ylamino]-naphthalene.

Stage 4

A solution of 9.4lg (0.01M) of disazo dye from Stage 3 in 100g water was stirred at a neutral pH 7.0. To this was added 6g triethylene tetramine and the resultant mixture warmed to 50° C for 3 hours. Cooled to room temperature and adjusted to pH 5.0 with acetic acid to precipitate dye. This was collected by filtration and washed with dilute acetic acid solution. The solid was redissolved in 200g water at pH 8.0 with 1N sodium hydroxide solution and subjected to dialysis. The resulting solution free from inorganic compounds was evaporated to dryness in vacuum at 60° C to give 8.37g (0.0079 moles, 79.6% yield) of the dye 2-[4-(4-sulphophenylazo)-7-sulpho-1-naphthylazo]-1-hydroxy-3-sulpho-7-[3-triethylenetetramine-1-yl-5-(3-sulphophenylamino)-2,4,6-triazin-1-ylamino]-naphthalene.

An ink was prepared as Example 2 using 3 parts of the colorant described in Example 6 Stage 4. The

ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 7

The procedure for Example 6 was repeated except that 6g tetraethylene pentamine was substituted for the 6g of triethylene tetramine in Stage 4 to produce the dye 2-[4-(4-sulphophenylazo)-7-sulpho-1-naphthylazo]-1-hydroxy-3-sulpho-7-[3-tetraethylenepentamin-1-yl-5-(3-sulphophenylamino)-2,4,6-triazin-1-ylamino]-naphthalene.

An ink was prepared as Example 2 using 3 parts of the colorant described in Example 7. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 8

The procedure for Example 6 was repeated except that 6g pentaethylenehexamine was substituted for the 6g of triethylene tetramine in Stage 4 to produce the dye 2-[4-(4-sulphophenylazo)-7-sulpho-1-naphthylazo]-1-hydroxy-3-sulpho-7-[3-pentaethylenehexamin-1-yl-5-(3-sulphophenylamino)-2,4,6-triazin-1-ylamino]-naphthalene.

An ink was prepared as Example 2 using 3 parts of the colorant described in Example 8. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 9

Stages 1 & 2

The procedure for Example 5 Stages 1 and 2 was repeated.

Stage 3

To a solution of 65.7g (0.1M) of the disazo dye from Stage 2, in 1 litre water and at pH 7.0 with 1N sodium hydroxide, was added slowly a solution of cyanuric chloride (18.5g) in 100ml acetone, keeping the temperature at <5°C. The reaction mixture was stirred for 3 hours, maintaining thee pH at 7.0 with 1N sodium hydroxide. The reaction was tested for completion by thin layer chromatography. Then 12g of ethanolamine added. Warmed to 40°C and stirred for 18 hours maintaining pH at 7.0 with 1N sodium hydroxide solution. Cooled to room temperature and 20% w/v sodium chloride was added to precipitate the dye. This was collected by filtration, washed with 20% brine and pulled dry to give 285g filter paste containing 60.12g (0.072 moles, 72.5% yield) of the dye 2-[4-(4-sulphophenylazo)-7-sulpho-1-naphthylazo]-1-hydroxy-3-sulpho-7-[3-chloro-5-(2-hydroxyethylamino)-2,4,6-triazin-1-ylamino)naphthalene.

Stage 4

A solution of 8.29g (0.01M) of the disazo dye from Stage 3 in 100ml water was stirred at pH 8.0 with 1N sodium hydroxide solution. To this solution was added 2g (0.01M) triethylene tetramine and the temperature raised to 60°C for 3 hours. Cooled to room temperature and the pH adjusted to 5.0 with glacial acetic acid to precipitate the dye. This was collected by filtration, washed with 200g water and pulled dry. The solid was redissolved in 200g water at pH 8.0 with 1N sodium hydroxide solution and subjected to dialysis. The resulting solution free from inorganic compounds was evaporated to dryness at 50-60°C in vacuum to yield

4.6g of a colourant 2-[4-(4-sulphophenylazo)-7-sulpho-1-naphthylazo]-1-hydroxy-3-sulpho-7-[3-triethylenetetramin-1-yl-5-(2-hydroxyethylamino)-2,4,6-triazin-1-ylamino]-naphthalene.

An ink was prepared as Example 2 using 3 parts of the colorant described in Example 9, Stage 4. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 10

Stage 1

A solution of 13.7g (0.1M) 4-aminobenzoic acid in 100g water was stirred at pH 8 with 2N sodium hydroxide solution. Then 50g 2N sodium nitrite solution was added followed by enough conc.HCl to adjust the pH to 1.0. Stirred at 5-10°C for 30 minutes after which 10% sulphamic acid solution was added to remove the excess nitrous acid.

A solution of 22.7g (0.1M) 1,7 Cleves acid was stirred in 100g water with sufficient 2N sodium hydroxide to give a neutral solution. This solution was then stirred at 5-10°C and the diazo solution prepared above was added, adjusting the pH to 7.0 with 2N sodium hydroxide solution. Stirred for 4 hours allowing the temperature to rise to 20-25°C. The pH was then adjusted to 5 with acetic acid to precipitate the dye which was collected by filtration, washed with a little dilute acetic acid and dried at 60°C to give 29.1g (0.080 moles, 80.3% yield) of the monoazo dye 4-(4-carboxyphenylazo)-7-sulpho-1-naphthylamine.

Stage 2

The procedure of Example 4 (Stages 2 and 3) was repeated except that the 0.1M of the 4-(4-sulphophenylazo)-7-sulpho-1-naphthylamine was replaced by 0.1M of the monoazo dye from Stage 1 above to give 2-[4-(4-carboxyphenylazo)-7-sulpho-1-naphthylazo]-1-hydroxy-3,6-disulpho-7-(3,5-di-(triethylenetetramin-1-yl)-2,4,6-triazin-1-ylamino)-naphthalene.

An ink was prepared as Example 2 using 3 parts of the colorant described in Example 10 Stage 3. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 11

The procedure for Example 10 Stage 1 was repeated followed by Stage 2 of Example 5 and Stage 3 of Example 4 to give the dye 2-[4-(4-carboxyphenylazo)-7-sulpho-1-naphthylazo]-1-hydroxy-3-sulpho-7-(3,5-di-(triethylenetetramin-1-yl)-2,4,6-triazin-1-ylamino)-naphthalene.

An ink was prepared as Example 2 using 3 parts of the colorant described in Example 11 Stage 3. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 12

Stage 1

A solution of 18.90g (0. 1M) sulphonic acid in 250g water was stirred at pH 5 with 1N sodium hydroxide. The temperature was cooled to 0-5°C and a solution of 18.52g cyanuric chloride in 100g acetone was added, allowing the pH to fall to 2.0. The reaction mixture was allowed to stir for1½ hours after which the pH was adjusted to 7.0 with 70°Tw caustic liquor.

18.0g (0.1M Ml=175) of metanilic acid was stirred in 80g water as a neutral solution and this solution

was added to the reaction mixture prepared above allowing the temperature to rise to room temperature. The pH was maintained at 6.5-7.0 with 1N sodium hydroxide solution, and the mixture stirred for 12 hours. The product was precipitated with 20% w/v sodium chloride and by adjusting the pH to 1.0 with concentrated hydrochloric acid. The product was collected by filtration and dried at 50°C to give 34.02g (0.072 moles, 72% yield) of the product 3-[3-chloro-5-(3-sulphophenylamino)-2,4,6-triazin-1-ylamino)-6-sulphoaniline.

Stage 2

28.5g 4,4′-diphenylamine-3-sulphonic acid was stirred in 40g 36°Tw hydrochloric acid and 320g water at 0-5°C. Then 100ml 2N sodium nitrite was added and the resultant solution stirred for 30 minutes. 28.7g beta salt was then added add sufficient 10% sulphamic acid solution to remove any excess nitrous acid.

A solution of 39g H acid in 200ml water at pH 6.0 with 70°Tw caustic liquor was prepared. This was added dropwise to the diazo solution prepared above keeping the temperature at 5-10°C. After the addition the pH was adjusted to 2.0 with 70°Tw caustic liquor. The resultant mixture was stirred for 12 hours at room temperature after which the reaction was shown to be complete.

Then 47.25g (0.1M) product from Stage 1 was stirred in 800ml water at pH 8 with 70°Tw sodium hydroxide. 50ml of 2N sodium nitrite was added and this solution was added to 80ml 36°Tw hydrochloric acid in 400ml water. This mixture was stirred for hour at 0-5°C. After 1 hour sufficient 10% sulphamic acid solution was added to remove any excess nitrous acid. This solution was added rapidly to the product prepared above at 0-5°C. The pH was adjusted to 10 with 70°Tw sodium hydroxide and the reaction mixture stirred for 12 hours at 10-15°C.

A solution of 10.9g (0.1M) 3-aminophenol in 100ml water with a few drops of 70°Tw sodium hydroxide to ensure a complete solution when warmed to 40°C. This solution was added to the mixture prepared above and stirred for 12 hours at pH 10.0. The product was collected by filtration, washed with 20% w/v sodium chloride and pulled dry to give a paste containing 81.6g (0.067 moles, 67/3% yield) of a mixture of 1-amino-2-(4-[4-(4-amino-2-hydroxyphenylazo)-phenylamino]-3-sulphophenylazo) -3,6-disulpho-8-hydroxy-7-(2-sulpho-5-[3-(3-sulphophenylamino)-5-chloro-2,4,6-triazin-1-ylamino]-phenylazo)-naphthalene and 1-amino-2-(4-[4-(2-amino-4-hydroxyphenylazo)-phenylamino]-3-sulphophenylazo)-3,6-disulpho-8-hydroxy-7-(2-sulpho-5-[3-(3-sulphophenylamino)-5-chloro-2,4,6-triazin-1-ylamino]-phenylazo)naphthalene.

Stage 3

12.12g (0.01M) of the product from Stage 2 was stirred in 50g water at 50°C to dissolve. To this solution 7.3g triethylene tetramine (5 M/M) was added and the resultant mixture stirred at 50°C for 12 hours. The reaction was tested for completion by thin layer chromatography. After cooling to 40-45°C, concentrated glacial acetic acid was added to adjust the pH to 6.5. Cooled to room temperature and the product collected by filtration, washed with a little 2N acetic acid and pulled dry. The solid was redissolved in 200g water at pH 8.0 with 2N sodium hydroxide solution and subjected to dialysis. The resultant solution free from inorganic compounds was evaporated to dryness at 50-60°C in vacuum to yield 9.57g of a mixture of 1-amino-2-(4-[4-(4-amino-2-hydroxyphenylazo)-phenylamino]-3-sulphophenylazo)-3, 6-disulpho-8-hydroxy-7-(2-sulpho-5-[3-(3-sulphophenylamino)-5-triethylenetetramin-1-yl-2,4,6-triazin-1-yl-amino]-phenylazo)-naphthalene and 1-amino-2-(4-[4-(2-amino-4-hydroxyphenylazo)-phenylamino]-3-sulphophenylazo) -3, 6-disulpho-8-hydroxy-7-(2-sulpho-5-[3-(3-sulphophenylamino)-5-triethylenetetramin-1-yl-2,4,6-triazin-1-ylamino]-phenylazo)-naphthalene.

An ink was prepared as Example 2 using 3 parts of the colorant described in Example 12 Stage 3. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 13

The procedure of Example 12 was repeated except that tetraethylene pentamine (8.7g) was substituted for tetraethylene tetramine in Stage 3 to produce a mixture of 1-amino-2-(4-[4-amino-2-hydroxyphenylamino]-3-sulphophenylazo)-3,6-disulpho-8-hydroxy-7-(2-sulpho-5-[3-(3-sulphophenylamino)-5-tetraethylenepentamin-1-yl-2,4,6-triazin-1-ylamino]-phenylazo)-naphthalene and 1-amino-2-(4-[4-(2-amino-4-hydroxyphenylazo)-phenylamino]-3-sulphophenylazo)-3,6-disulpho-8-hydroxy-7-(2-sulpho-5-[3-(3-sulphophenylamino)-5-tetraethylenepentamin-1-yl-2,4,6-triazin-1-ylamino]-phenylazo)-naphthalene.

An ink was prepared as Example 2 using 3 parts of the colorant described in Example 13. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

## Example 14

The procedure of Example 12 was repeated except that pentaethylenehexamine (11.6g) was substituted for tetraethylene tetramine in Stage 3 to product a mixture of 1-amino-2-(4-[4-amino-2-hydroxyphenylamino]-3-sulphophenylazo)-3,6-disulpho-8-hydroxy-7-(2-sulpho-5-[3-(3-sulphophenylamino)-5-pentaethylenehexamin-1-yl-2,4,6-triazin-1-ylamino]-phenylazo)-naphthalene and 1-amino-2-(4-[2-amino-4-hydroxyphenylamino]-3-sulphophenylazo)-3,6-disulpho-8-hydroxy-7-(2-sulpho-5-[3-(3-sulphophenylamino)-5-pentaethylene hexamin-1-yl-2,4,6-triazin-1-ylamino]-phenylazo)-naphthalene.

An ink was prepared as Example 2 using 3 parts of the colorant described in Example 14. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

## Example 15

### Stage 1

The procedure for Example 12 Stage 1 was repeated.

### Stage 2

13.8g (0.1M) of paranitroaniline was stirred in 50g water at 0-5° C. To this neutral solution 21.6g of 32% sodium nitrite solution was added. The resulting mixture was stirred vigorously for 15 minutes.

This mixture was added to 160g water containing 42g of 27% hydrochloric acid at 5-10° C. Stirred for 30 minutes after which sufficient 10% sulphamic acid solution was added to remove any excess nitrous acid.

A solution of 39.2g H acid in 400g water was stirred at 5-10° C. The diazo solution prepared above was added with vigorous agitation keeping the temperature at 5-10° C. The reaction mixture was stirred for 4 hours.

87.3g of the product from Stage 1 was stirred in 400g water at pH 8-9. To this solution 52g 2N sodium nitrite solution was added and this then added to 300g ice/water containing 80g 36° Tw hydrochloric acid. The resultant mixture was stirred for 1 hour. Sufficient 10% sulphamic acid solution was added to remove any excess nitrous acid. This mixture was then added rapidly to the monoazo solution prepared above at 5-10° C. The pH was then adjusted to 10 with 70° Tw sodium hydroxide. Stirred for 12 hours allowing to warm to room temperature. Then 15% w/v sodium chloride was added to precipitate product which was collected by filtration, and pulled dry to give 347g paste containing 57.3g (0.06 moles, 60% yield) of the dye 1-amino-2-(4-nitrophenylazo)-3,6-disulpho-8-hydroxy-7-(2-sulpho-5-[3-(3-sulphophenylamino)-5-chloro-2,4,6-triazin-1-ylamino]-phenylazo)-naphthalene.

### Stage 3

9.5lg (0.01M) of the product from Stage 2 was stirred in 100g water. To this suspension 7.32g (5 M/M) triethylenetetramine was added and the mixture warmed to 55-60° C for 5 hours. The reaction was followed by thin layer chromatography. Then glacial acetic acid added to adjust the pH to 6.0 and to precipitate the dye. This was collected by hot filtration, washed with hot water and pulled dry. The product was redissolved in 200g water at pH 8.0 with 1N sodium hydroxide solution and subjected to dialysis. The resulting solution free from inorganic compounds was evaporated to dryness at 60°C in vacuum to give 4.6g (0.0043 moles, 43.3% yield) of the dye 1-amino-2-(4-nitrophenylazo)-3,6-disulpho-8-hydroxy-7-(2-sulpho-5-[3-(3-sulphophenylamino)-5-triethylenetetramin-1-yl-2,4,6-triazin-1-ylamino]-phenylazo)-naphthalene.

An ink was prepared as Example 2 using 3 parts of the colorant described in Example 15 Stage 3. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 16

The procedure of Example 15 was repeated except that tetraethylenepentamine (8.8g) was substituted for tetraethylene tetramine in Stage 3 to produce the dye 1-amino-2-(4-nitrophenylazo)-3,6-disulpho-8-hydroxy-7-(2-sulpho-5-[3-(3-sulphophenylamino)-5-tetraethylenepentamin-1-yl-2,4,6-triazin-1-ylamino]-phenylazo)-naphthalene.

An ink was prepared as Example 2 using 3 parts of the colorant described in Example 16. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 17

The procedure for Example 15 was repeated except that pentaethylenehexamine (11.6g) was substituted for tetraethylene tetramine in Stage 3 to produce the dye 1-amino-2-(4-nitrophenylazo)-3,6-disulpho-8-hydroxy-7-(2-sulpho-5-[3-(3-sulphophenylamino)-5-pentaethylenehexamin-1-yl-2,4,6-triazin-1-ylamino]-phenylazo)-naphthalene.

An ink was prepared as Example 2 using 3 parts of the colorant described in Example 17. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

Example 18

Stage 1

A solution of 1,3-phenylenediamine-4-sulphonic acid (1.9g, 0.01M) in 50g water and 1 drop calsolene oil was stirred at pH 7.0 with 1N sodium hydroxide solution. To this was added 1.9g cyanuric chloride in 50g acetone and the resultant mixture stirred at 0-5°C and pH 2-3 for 2 hours. The pH was then adjusted to 7.0 with 70°Tw sodium hydroxide liquor and a solution of para phenylenediamine (0.55g, 0.05M) in 50g acetone added. Warmed to 40°C and stirred at pH 8.0 for 30 minutes. The pH was adjusted to 4.0 with 36°Tw hydrochloric acid to give a white precipitate, which was collected by filtration, washed with 2N hydrochloric acid and pulled dry. The filter cake was then stirred in 200g water and the pH adjusted to 8.0 with 70°Tw sodium hydroxide liquor. To this was added 6g 2N sodium nitrite and the resultant solution poured onto ice/hydrochloric acid (sufficient to adjust the pH to 1.0-2.0). This mixture was stirred for 1 hour, after which sufficient 10% sulphamic acid was added to remove any excess nitrous acid.

The reaction mixture was added slowly to a solution of 2.3g 1,7 Cleves acid in 100g water, keeping the pH at 8.0 by additions of 1N sodium hydroxide solution. The reaction was followed by thin layer chromatography. After 1 hour the reaction was adjusted to pH 3.0 with 36°Tw hydrochloric acid to precipitate the dye which was collected by filtration, washed with dilute hydrochloric acid and pulled dry.

The filter cake was stirred in 800g water and the pH adjusted to 9.0 with 70°Tw sodium hydroxide liquor. To this solution, 6g 2N sodium nitrite solution was added, cooled to 0-5°C and 20g 36°Tw hydrochloric acid run in. Allowed to warm to room temperature and poured onto a solution of 2.84g gamma acid in 100g water at pH 8.0 with sodium carbonate. After 1 hour 10% w/v sodium chloride was added and

the pH adjusted to 5.0 Stirred for 30 minutes at room teperature, then the product was collected by filtration, washed with water, washed with acetone and dried at 50 °C to give 8.0g (0.00477 moles, 47.7% yield) of the dye, 1,4-bis-(4-[3-(4-[7-amino-1-hydroxy-3-sulphonaph-2-ylazo]-6-sulphonaphth-1-ylazo)-4-sulphoanilino ]-6-chloro-s-triazin-2-ylamino)-benzene.

Stage 2

3g (0.0018M) of the product from Stage 1 was stirred in 80g water and 2g triethylenetetramine added. The solution was stirred at 60-70 °C for 3 hours. Then the pH was adjusted to 5.0 with glacial acetic acid. The product was collected by filtration, washed with water and dried at 50 °C in vacuum to give 2.91g (0.0015 moles, 85% yield) of a dye 1,4-bis-(4-[2-aminoethylamino-ethylaminoethylamino]-6-[3-(4-[7-amino-1-hydroxy-3-sulphonaphth-2-ylazo]-6-sulphonaphth-1-ylazo)-4-sulphoanilino]-s-triazin-2-yl-amino)benzene.

An ink was prepared as Example 2 using 3 parts of the colorant described in Example 18. The ink was applied to plain paper, using a piezo or thermal ink-jet printing machine, to give a printed image with a very high resistance to water. When the paper carrying the printed image was immersed in water or sprayed with a jet of water there was no detectable colour loss or deterioration of print quality.

## Claims

1. A colorant free from cellulose reactive groups comprising an anionic dye carrying from 1 to 10 acidic groups and at least one poly($C_{2-4}$-alkyleneimine) group containing from 2 to 10 $C_{2-4}$-alkyleneimine units.

2. A colorant according to Claim 1 wherein the anionic dye comprises 1 or 2 chromophoric groups and from 1 to 3 polyvalent linking groups through which each chromophoric group is linked to another chromophoric group or to a poly($C_{2-4}$-alkyleneimine) group.

3. A colorant according to Claim 2 selected from the group consisting of:

D - J - R

R - J - D - J - R

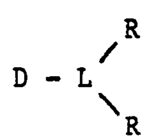

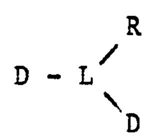

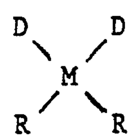

wherein
each D independently is a chromophoric group;
each J independently is a divalent linking group;
each L independently is a trivalent linking group;
M is a tetravalent linking group; and
each R independently is a poly($C_{2-4}$-alkyleneimine) group containing from 2 to 10 AI units;
in which the groups D, J, L and M in any colorant carry, in total, from 1 to 10 acidic groups.

4. A colorant according to any one of Claims 1 to 3 in which the acidic groups are selected from sulphonate, carboxylate and phosphonate.

5. A colorant according to any one of Claims 1 to 4 which contains from 2 to 6 acidic groups.

6. A colorant according to any one of Claims 2 to 5 wherein the chromophoric group is the residue of an anionic azo, anthraquinone, phthalocyanine or triphendioxazine dye.

7. A colorant according to Claim 6 wherein the chromophoric group is the residue of an azo dye derived from benzene or naphthalene diazo components and benzene, naphthalene or monocyclic heteroaromatic couplers.

8. A colorant according to any one of Claims 1 to 7 wherein the poly($C_{2-4}$-alkyleneimine) group is of the formula:

$- NH -(C_mH_{2m}NH)_pW$ I

wherein m is from 2 to 4, preferably 2 or 3;
p is from 2 to 10, preferably 2 to 6;
and W is H or $C_{1-4}$-alkyl.

9. A colorant according to any one of Claims 1 to 8 wherein the ratio of the number of acid groups to the number of poly($C_{2-4}$-alkyleneimine) groups is such that the isoelectric point is in the pH range from 5 to 7.

10. A colorant according to any one of Claims 2 to 9 wherein each linking group is selected from 2,4,6-triazin-1,3-ylene, 2,4,6-triazin-1,3,5-ylene, methylene, sulphonyl, 6-carbonylquinoxalin-2,3,6-ylene, 5,6-dichloro-2,4-pyrimidin-1,3-ylene, 6-chloro-2,4-pyrimidin-1,3,5-ylene, 2,4-pyrimidin-1,3,5,6-ylene and carbonyl.

European Patent Office

# EUROPEAN SEARCH REPORT

Application Number

EP 89 30 5471

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 8, no. 114 (C-225)[1551], 26th May 1984; & JP-A-59 27 973 (DAINIPPON INK KAGAKU KOGYO K.K.) 14-02-1984<br>* Abstract *<br>--- | 1-8,10 | C 09 B 69/10<br>C 09 D 11/02 |
| A | EP-A-0 223 501 (XEROX CORP.)<br>* Claims 1-10 *<br>----- | 1-10 | |

TECHNICAL FIELDS SEARCHED (Int. Cl.4)

C 09 B
C 09 D

The present search report has been drawn up for all claims

| Place of search | Date of completion of the search | Examiner |
|---|---|---|
| THE HAGUE | 07-07-1989 | GINESTET M.E.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)